# EUROPEAN PATENT APPLICATION

(11) **EP 1 713 002 A1**
(43) Date of publication of application: **18.10.2006**
(21) Application number: 04722458.9
(22) Date of filing: 22.03.2004
(51) Int. Cl.: G06F 13/00

(54) **VIRTUAL COMMUNITY SYSTEM**

(30) Priority: 02.02.2004 JP 2004025293
(71) Applicant: Core Colors, Inc., Tokyo 151-0066 (JP)
(72) Inventor: KIKO, Hideaki, Shibuya-ku, Tokyo 1510066 (JP)
(74) Representative: Zimmermann, Gerd Heinrich
(86) International application number: PCT/JP2004/003866
(87) International publication number: WO 2005/073863

(57) **Abstract**

A virtual community system relating to the embodiment comprises a community providing server 10, a user terminal 20, and a user website server 30 which are connected to each other via a network 40. The community providing server 10 issues a community tag in order to mount a tag community on a website of a registered user. The user inserts the community tag in HTML data constituting their own website. HTML data inserted with the community tag is stored in the user website server. The website partially containing the tag community is shown on a user terminal 20 of a user who accesses the website of the registered user, thus facilitating their participation in the virtual community.

## Description

### TECHICAL FIELD OF THE INVENTION

This invention relates to a virtual community system which offers a virtual community built on a network, like the Internet.

### BACKGROUND OF THE INVENTION

In recent years, owing to the spread of the Internet, many communities on the network are provided through bulletin board services, chat services, mailing lists, etc. In the community on the network, users who have a common interest or taste interact with each other and exchange information.

However, since conventional communities on the network have been based on only text data, exchangeable information through them has been limited considerably, and as a result, people have not really found much entertainment in them. Besides, since the communities have been text-based, users who can participate in them have been limited, in many cases, to specific users who are familiar with computers, and the level of the communities has been too high for beginners.

Against such a background, some virtual communities which comprise virtual effects produced by using CG (computer graphic) characters which act for each user and are very entertaining and easy for beginners to participate in have been provided. For example, some such virtual communities have been disclosed in Reference 1 and Reference 2 listed below.
[Reference 1] JP 2002-82894 A
[Reference 2] JP 2002-312612 A
Reference 1 and Reference 2 disclose community environment providing systems which enable a user to participate in a community by using the character which substitutes for each user. In use of such a virtual community, if a user accesses a server through a client terminal, prescribed data are exchanged between the server and the client terminal, and then characters, virtual street scenes, houses, etc. are displayed on the client terminal. Then, a user can communicate with others through a character which acts for each of them after they have logged into a virtual community with their user IDs and passwords.

### SUMMARY OF THE INVENTION

However, in a use of a conventional virtual community, a user cannot participate in it without accessing a server directly via a client terminal. Namely, to participate in a virtual community, a user has to access a website provided by the server and log in at a login screen common to all users, and this process has given users a lot of trouble. For example, in the case that a user has already been close to particular users, in order to meet them, they have to log in at a login screen every time, enter a virtual community, and then look for characters for those users. Furthermore, a user cannot check whether there is anybody visiting the user's house or not without logging in.

Moreover, when a virtual community provider wants more users to participate in its virtual community, it has almost no choice but to advertise in a magazine or to place an advertisement linked to its own site on other famous sites, so that they cannot advertise effectively.

The present invention is made to resolve those problems. The object of the present invention is to provide a virtual community system which can provide more convenience for participating users and realize effective advertising.

To solve the problems, a community providing server relating to the present invention provides a virtual community for a user who has a user terminal connected to the server via a network, comprising: a user management information database which stores information concerning registered users who are registered with the virtual community; a contents database which stores contents data constituting the virtual community; and a control means for issuing, for the purpose of mounting a virtual tag community on a website of the registered user, a community tag which is to be inserted in HTML data constituting the website.

Moreover, a virtual community system relating to the present invention provides a virtual community for a user, comprising: a virtual community providing server, a user terminal, and a user website server, which are connected to each other via a network and, wherein, the community providing server comprises a user management information database which stores information concerning registered users who are registered with the virtual community, a contents database which stores contents data constituting the virtual community, and a control means for issuing, for the purpose of mounting a virtual tag community on a website of the registered user, a community tag which is to be inserted in HTML data constituting the website, and the user website server comprises a storage means for saving HTML data inserted with the community tag.

Besides, a virtual community providing method relating to the present invention provides a virtual community for a user who has a user terminal connected to a community providing server via a network, comprising: a step for issuing a community tag for a user who accesses the community server and registers with the virtual community in order to mount a virtual tag community on a website of the registered user, the community tag being inserted in HTML data constituting the website.

Moreover, a virtual community providing program relating to the present invention, for making a computer connected to a user terminal via a network provide a virtual community for a user who has the user terminal, causes the computer to execute a step for issuing a community tag for a user who accesses the community and registers with the virtual community in order to mount a virtual tag community on a website of the registered user, the community tag being inserted in HTML data constituting the website.

According to the virtual community system relating to the present invention, a user who has been registered with a virtual community can use contents of the virtual community by accessing a registered user's website implementing a tag community, and does not always have to access a specified website to use the content of the virtual community.

### BRIEF DESCRIPTION OF THE DRAWINGS

FIG. 1 is a schematic diagram illustrating a virtual community system relating to the embodiment of the present invention.
FIG. 2 is a block diagram schematically illustrating a structure of a database of a community providing server relating to the embodiment of the present invention.
FIG. 3 is a drawing illustrating contents of a community tag relating to the embodiment of the present invention.
FIG. 4 is a drawing illustrating contents of a community tag relating to the embodiment of the present invention.
FIG. 5 is a flow chart illustrating procedures for inputting a community tag relating to the embodiment of the present invention.
FIG. 6 is a flow chart illustrating procedures for showing a tag community on a user terminal relating to the embodiment of the present invention.
FIG. 7 is a drawing illustrating contents of a tag community which relates to the embodiment of the present invention.
FIG. 8 is a drawing illustrating contents of a tag community which relates to the embodiment of the present invention.
FIG. 9 is a drawing illustrating contents of a tag community which relates to a modified example of the embodiment of the present invention.

### DESCRIPTION OF THE PREFERRED EMBODIMENTS

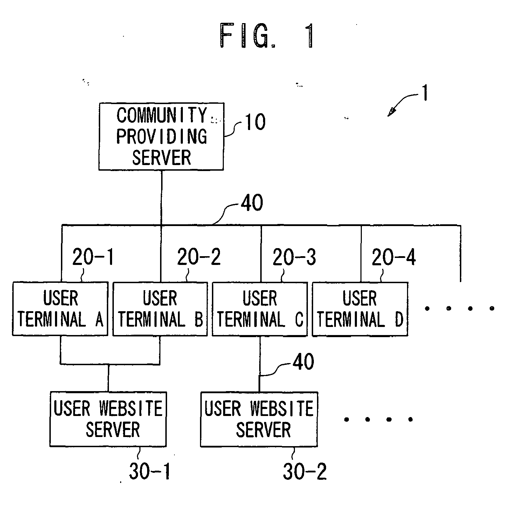

Hereafter, the embodiment of the present invention will be described in detail with reference to the drawings. FIG. 1 is a schematic diagram illustrating a configuration of a virtual community system relating to the embodiment. As shown in the drawing, a virtual community system 1 comprises a community providing server 10 where various data for providing the virtual community are stored, a user terminal 20 which is used by each of users who participate in the virtual community, and a user website server 30 where contents data of websites (homepages) of users who have their own website are stored. The community providing server 10, the user terminals 20, and the user website servers 30 are connected via a network 40 like the Internet etc., and data can be exchanged between them through respective interfaces.

The virtual community system 1 relating to the embodiment places an HTML (Hypertext Markup Language)tag for the virtual community (hereinafter called "community tag") into HTML data constituting a website of a user and mounts contents of the virtual community (hereinafter called "tag community") on a website of each user. According to this system, a user participating in the virtual community can communicate with other users by accessing a user's website implementing a tag community and does not always have to access a specified homepage of the virtual community to communicate with other users.

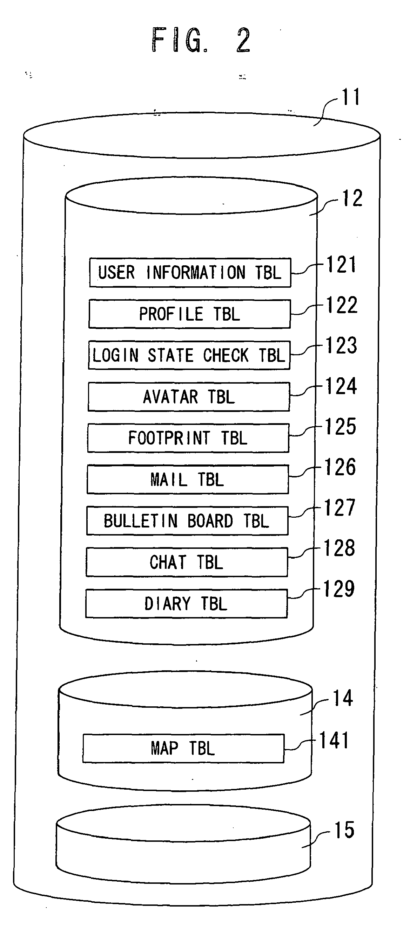

The community providing server 10 is set up by a virtual community provider and comprises an arithmetic unit for carrying out various operations, which is not shown in the figure, and a database (DB) storing various data. FIG. 2 is a block diagram schematically illustrating a structure of DB 11 of the community providing server 10. As shown in the drawing, DB 11 comprises a user management information DB 12 where various information concerning users who have been registered with the virtual community is stored, a contents DB 14 where contents data of a specified website for the virtual community and contents data of a tag community shown on a user terminal 20 are stored, and an application DB 15 where applications to execute events in the virtual community, procedures to log in, etc. are stored.

Moreover, as shown in the drawing, in the user management information DB 12, a user information table (hereinafter called "TBL") 121, a profile TBL 122, a login state check TBL 123, an avatar TBL 124, a footprint TBL 125, a mail TBL 126, a bulletin board TBL 127, a chat TBL 128, and a diary TBL129 are created. Various records linked to a user ID for managing each user are stored in each TBL.

Hereinafter, records which are stored in each table will be described. In the user information TBL 121, records on "user ID", "ID for login", "passwords", "name" which is used by each user as their own name in the virtual community, "address" indicating a location of a user's house in the virtual community, and "homepage" indicating an address of a user's website, are stored. In the profile TBL 122, records on "user ID", "self-introduction", and "site introduction" by which a user introduces their website are stored. In the login state check TBL 123, records on "user ID", "login state" indicating whether each user has logged into the virtual community or not, and "whereabouts information" indicating which user's house each user is now visiting are stored. In the avatar TBL 124, records on "avatar" indicating a character which, in the virtual community, acts for each user are stored. Each avatar is to be selected by each user from multiple CG characters, and the CG data of the avatars are stored in the contents DB 14.

In the footprint TBL 125, records on "user ID", and "visiting user ID" which is the ID of a user who has visited the home of that user, are stored. In the mail TBL 126, records on "user ID", "message ID", "sender user ID", "sender's name", "receiver user ID", "receiver's name", "reference message ID", "date", "title", "text", and "message size" are stored. In the bulletin board TBL127, records on "user ID", "posting user ID", "posting person's name", "message ID", "date", and "text" are stored. In the chat TBL 128, records on "user ID", "chat ID" which is a user ID with whom that user chatted, and "text" are stored. In the diary TBL 129, records on "user ID", "message ID", "date", "title", and "text" are stored.

Also, a map TBL 141 where "map information" of the whole virtual community is stored is created in the contents DB 14.

Next, a configuration concerning a user terminal 20 will be described. Each user uses their own user terminal 20, and as shown in FIG. 1, it is possible to place multiple user terminals 20, that is, a user terminal A 20-1, a user terminal B 20-2, a user terminal C20-3, a user terminal D20-4, and so on. It goes without saying that multiple users may use the same terminal. A user terminal 20 consists of a personal computer comprising a keyboard and a mouse as input means, a display as means for showing something, and the like. A user terminal 20 accesses a user website server 30 and the community providing server 10 via the network 40 and receives contents stored in the two servers, and as a result, contents of a website and a tag community are shown on the display.

A user website server 30 can be a server 30-1 owned by an Internet service provider (ISP) where a user has their own website and a web server 30-2 which a user installs at home. Therefore, multiple users may use the same user website server. In the embodiment, users A and B use a user website server 30-1, and users C and D use a user website server 30-2.

In a user website server 30, HTML data constituting a website are stored. A virtual community tag for showing contents of the virtual community on a user's website is placed into this HTML data. As a result, if a user accesses this website, contents data of the virtual community is downloaded from the community providing server 10 to a user terminal 20 of the user, thus showing a tag community on a part of the website shown on the display.

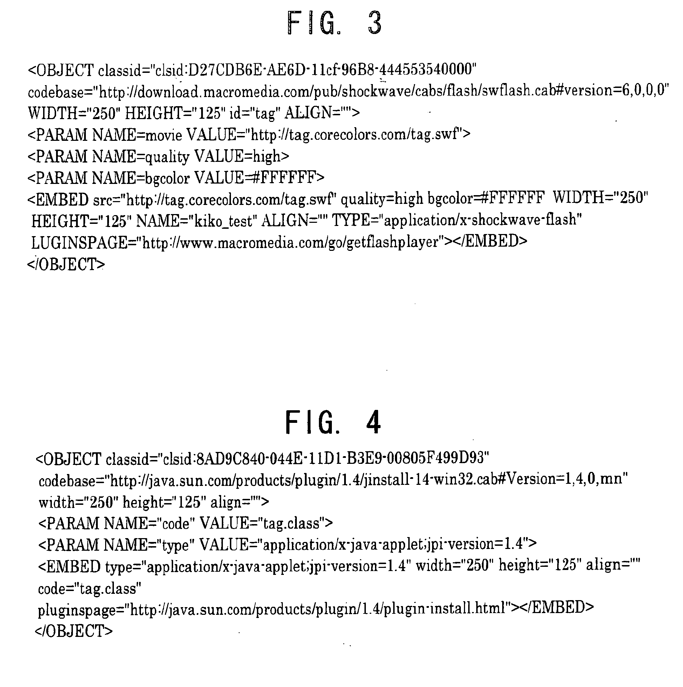

FIG. 3 is a drawing illustrating contents of a virtual community tag stored in a user website server 30 as a part of HTML data. In the embodiment, a tag written with Flash is used, and information of a size of a tag community shown on a website, a link to the community providing server, and the like are written on the tag, while it can be written not only with Flash but also Java (registered trademark) Applet, ActiveX, etc.

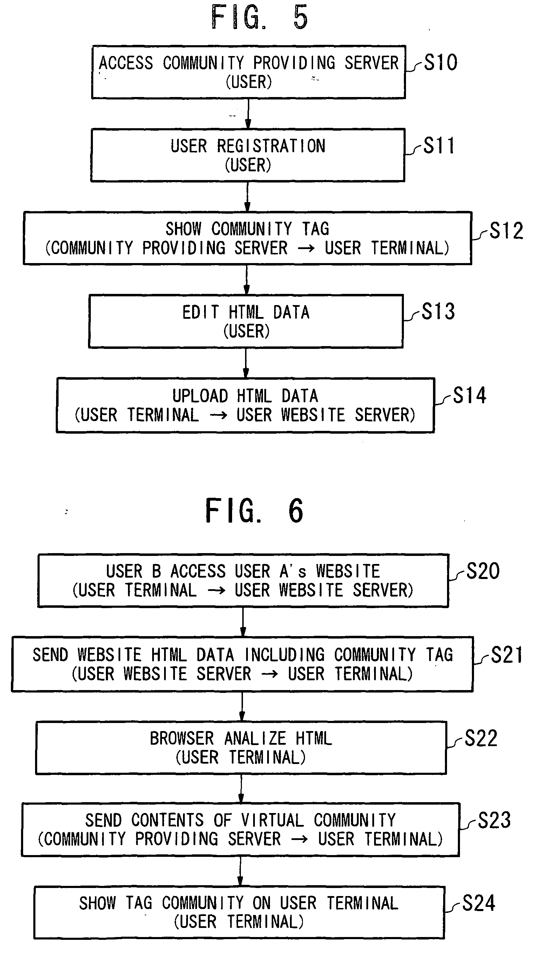

Next, procedures where a user mounts a community tag on their own website in the virtual community system 1 will be described. FIG. 5 is a flow chart illustrating procedures with which a user inserts a community tag.

First, in a step 10 (S10), a user who has not been registered with the virtual community accesses a website of the virtual community. That is, the user accesses the community providing server 10 via the user terminal 20. Next, in S11, the user goes to a user registration page of the virtual community and executes a procedure to be registered as its user. At this time, the user inputs information concerning themselves via the user terminal 20. The input data is sent to the community providing server 10 and stored in prescribed tables in the user management information DB 12. After the user registration has been completed, the community providing server 10 issues a community tag in S12. That is, the data of the community tag shown in the FIG. 4 is sent from the community sever 10 to the user terminal 20 and shown on a display of the user terminal 20. A community tag is issued as above using a procedure where an arithmetic unit of the community providing server 10 creates data of the community tag based on information stored in the contents DB 14 and sends it through its communications interface.

Next, in S13, the user edits HTML data of the user's website and inserts a community tag into it. The procedures are then completed after the user has uploaded HTML data edited by themselves to a user website server 30 in S 14. After this, on a terminal of a person accessing the website, a tag community is shown at a prescribed position in the website in a prescribed size. Also, the user can decide, arbitrarily, at which part of the website the tag community is shown. The user can set the location at will when a community tag is written in the HTML data, so that the tag community is shown at the location which the user desires.

Next, the procedures where, in a user of the virtual community system 1, the user A's website mounted a virtual tag community is accessed by another user B, and contents of the website and the tag community are shown on the user B's user terminal B 20-2 will be described with reference to a figure. FIG. 6 is a flow chart illustrating procedures to show a tag community on a user terminal which has accessed a website inserted with a community tag.

First, in S20, the user B accesses the user A's website. That is, the user terminal B 20-2 accesses the user website server 30-1 storing data of the contents of the user A's website. Then, in S21, the user website server 30-1 sends HTML data constituting the user A's website, including a community tag, to the B's user terminal B 20-2. In S22, a browser application installed on the user terminal B 20-2 analyzes the HTML.

Because the community tag is interpreted by this analysis, the user terminal B 20-2 accesses the community providing server 10 in S23. Then, the community providing server 10 sends data of contents of the virtual community to the user terminal B 20-2. At this time, with cookies, the community providing server 10 checks whether the user B has already logged into the virtual community or not. The data sent to the user terminal B 20-2 comprises login information of the user B and login information of users who are accessing the user A's website at the current time.

Next, in S24, the tag community contained in the user A's website is shown on a display of the user terminal B 20-2 via the browser. Also, in the tag community, avatars of users who are on the user A's website are shown based on the above-mentioned login information. If the user B is in a logged-in state, information stored in the avatar TBL 124 is referred to, and then an avatar which has been selected by the user B is shown. If the user B is in a logged-out state, a zombie indicating that a user is in a logged-out state is shown as a character acting for the user B. If a user besides the user B is on the website, an avatar registered with the avatar TBL 124 as a character which acts for the user is shown while the user is in a logged-in state, and a zombie indicating that a user is in a logged-out state is shown while the user is in a logged-out state. Besides, a logged-out state includes not only a state where a user registered with the virtual community is not in a logged-in state but also a state where a user has not been registered with the virtual community yet.

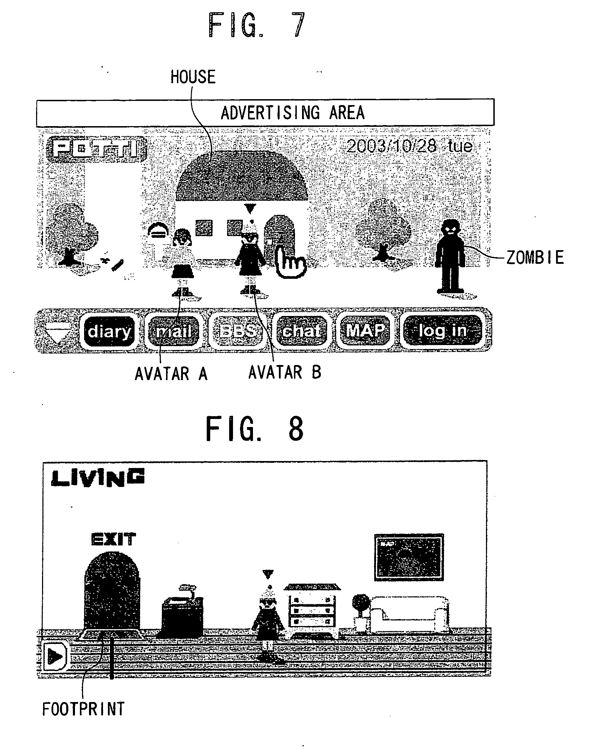

Next, contents of the virtual community will be described in detail with reference to the drawings. FIG. 7 is a drawing illustrating contents of a tag community which are shown when the registered users A, B, and C are on the user A's website. The tag community shows a part of a whole map of the virtual community, and part corresponds to the user A's address. Each user terminal 20 of each user refers to information stored in the user management information DB 12 and the contents DB 14, and as a result, the tag community is shown.

Here, the users A and B have already logged into the virtual community, and the user C is in a logged-out state. Therefore, each user terminal 20 refers to the login state check TBL 123 and the avatar TBL 124, and as a result, an avatar A acting for the user A, an avatar B acting for the user B, and a zombie C acting for the user C are now shown on the user A's tag community. In addition, if the user C is a user who has not been registered with the virtual community yet, the same zombie is shown as a character acting for the user C because the fact remains that the user C is not in a logged-in state.

Meanwhile, as shown in the drawing, a "diary'' button, a "mail" button, a "BBS" button, a "chat" button, a "MAP" button, and a "log in" button are shown on a tag community in order to enable a user to enjoy contents of each button by clicking each button.

The "log in" button is shown when a user who is on a website that contains a tag community has not logged in yet, while a "log out" button, instead of the "log in" button, is shown on a user terminal 20 of a user who has already logged in. Accordingly, FIG. 7 illustrates buttons shown on the user C's user terminal C20-3, and the "log out" button is shown on the user A's terminal 20 and the user B's user terminals 20. The user C can log in by pressing down the "log in" button and entering their own user ID and password, while the users A and B can log out by pressing the "log out" button. The virtual community system also restricts use of contents for a user who is not in a logged-in state.

The "diary" button is a button for executing contents of a diary, and if a user clicks this button, they can read/write the diary. However, it is only the user A who can write in the tag community illustrated in FIG. 7 because it is the tag community owned by the user A. When the contents of the diary are executed, information is exchanged between a user terminal 20 and the diary TBL 129.

In the same way, the "mail" button, the "BBS" button, and the "chat" button are buttons for executing contents of mail, a bulletin board, and chat, and if a user clicks those buttons, they can enjoy the contents of each button. When the contents of each button are executed, information is exchanged between a user terminal 20 and the mail TBL 126/the bulletin board TBL 127/the chat TBL 128.

The "MAP" button is a button for showing a map of the virtual community. If a user clicks this buttons, prescribed data stored in the map TBL 141 and the user information TBL 121 is referred to, and as a result, the map is shown on a user terminal 20. Registered users are shown on the map with a mapping process according to information of each user's address. If a user clicks another arbitrarily-chosen user, the user who has clicked the arbitrarily-chosen user can move to the arbitrarily-chosen user's website. If the arbitrarily-chosen user's website contains a community tag, an avatar acting for the user who has clicked the arbitrarily-chosen user is shown in a tag community on the website after the user who has clicked the arbitrarily-chosen user moves to the website.

Besides, as shown in FIG. 7, an area for advertising is set in an upper area of a tag community. Therefore, a virtual community provider can show arbitrarily-chosen advertisements on the area for advertising. In a conventional virtual community which provides a specific website, advertisements have been shown only to users who access the specific website, for the purpose of login and being registered. On the other hand, in the embodiment, advertisements can be placed in many tag communities, each of which is shown on a registered user's website, and this enables more effective advertising. Another applicable way to advertise with a tag community is for an advertisement to be shown for the first two or three seconds after a user has accessed a website and a tag community has been shown in the browser.

Moreover, in the embodiment, if a user clicks a house in a tag community, they can enter the house. FIG. 8 is a drawing illustrating a living room shown in a tag community when a user enters a house. If a user other than user A who owns the house enters the living room, the user's address and a face of the user's avatar are stored into the footprint TBL 125 by a footprint function. Then, if the user A clicks a point on the footprint, a list for the footprint is shown. If the user A clicks an arbitrarily-chosen user on the list for the footprint, the user A can move to the chosen user's website. However, when a zombie, indicating a user who is in a logged-out state, enters the living room, no footprint is left.

Furthermore, in the embodiment, a user can move their own avatar used in a tag community from right to left or up and down using a mouse of a user terminal 20. When the avatar is moved to the extreme right/left or upper/lower end of a tag community, it moves to a website of another user who has an address next to the tag community on the map of the virtual community. "Map information" in the map TBL 141, information on "address" in the user information TBL 121 and "homepage" in the profile TBL 122 are referred to, and as a result, the avatar can move as above.

A detailed description has been given above, but the functions of the community providing server 10, the user terminals 20, and the user website servers 30 can be realized by executing programs installed on these computers using an arithmetic unit of each computer. The programs do not always have to be actually installed. For example, it's also possible for the programs to be provided by an ASP (Application Server Provider). Besides, the programs can be installed on each computer directly by using storage media and can be installed via a network.

According to the embodiment, a user registered with the virtual community can use contents of the virtual community by accessing a website of a registered user where a tag community is contained, and does not always have to access a specified website to use content of the virtual community. Namely, because there are as many virtual communities as the registered users having their own website contained a tag community, it is possible to provide a virtual community which has mass appeal and is easy to participate in. The virtual community which has mass appeal and is easy to participate in as mentioned above may increase the number of members easily and bring significant benefits for a virtual community provider.

Moreover, because a virtual tag community is contained on a registered user's website, a load of the center server (community providing server) of the virtual community can be reduced significantly compared with a conventional virtual community, and simplification of a configuration of the server provides significant advantages economically.

When a registered user accesses a website containing a tag community, the avatar acting for the user is shown. Meanwhile, when a user who is not in a logged-in state (an unregistered user is also included in "the users who are not in a logged-in state".) accesses, a zombie is shown. Therefore, the number of users who are on the website can be known easily and in real time by counting the number of characters in a tag community. In particular, a registered user who is accessing their own website has the advantage of knowing the number of people who are accessing the website at the current time.

Also, advertisements can be shown on many websites of registered user, and significant commercial benefits can be provided, simply by inserting a tag for advertising into a community tag.

Detailed description of the embodiment has been provided above, but it should be noted that the present invention is in no way limited to the details of the described embodiments and modifications may be made without departing from the scope of the claims. For example, the contents of the TBLs and the records mentioned above are only examples, and those may be changed suitably according to changes of contents constituting the virtual community.

Also, in the embodiment, while the description was provided focusing on a registered user who has their own website, it goes without saying that a user who doesn't have such a website can also be registered. Furthermore, users who use a cellular phone to access can also be registered. If a website for a virtual community used by cellular phone users only is created and stored in the community server, those cellular phone users can be accepted as registered users.

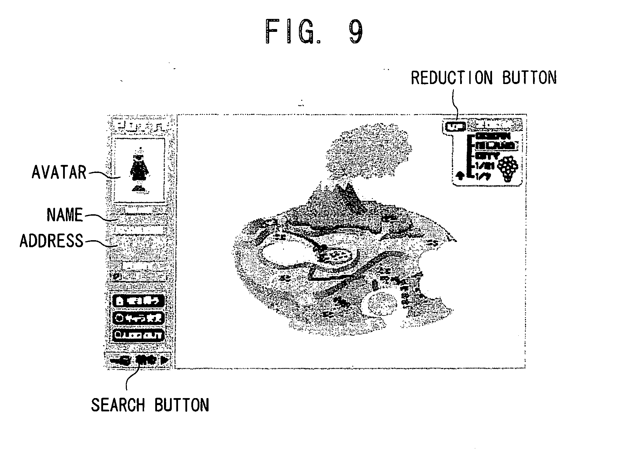

Next, a virtual community system additionally containing a search function as an example of a modified version of the embodiment will be described. In the example of modified versions of the embodiment, the search function is linked to map information, and results of the search can be grasped visually and easily. FIG. 9 is a drawing illustrating contents shown, as a tag community on a website, on a user terminal when the search function is executed. This screen is shown after the "MAP" button shown in FIG. 7 has been pressed. In the map shown in FIG. 9, a "house" of a registered user is shown according to its "address". Records on "address" in a user TBL 121 are referred to, and as a result, the "house" is shown.

The search function of the example of modified versions of the embodiment comprises keyword searches and genre searches. If a user clicks the "search button" in FIG. 9, a box for text input and a button for genre searches are shown, so that a user can select any search function. Procedures for the searches are executed-by an arithmetic unit of a community providing server. As mentioned below, results of the search are shown on a tag community after having been edited and sent to a user terminal.

In the key word search, after a user inputs an arbitrarily-chosen key word and performs the search, the number of extracted users is shown, and at the same time, points on a map corresponding to addresses of the extracted users blink on and off. Records on "self introduction", "site introduction" and so on in a profile TBL 122 are referred to, and as a result, the key word search is executed. If the user wants to make the search results even more specific, they can refine the search by additionally inputting more key words. After the search refinement has been carried out, points on a map corresponding to addresses of the users extracted by the refined search blink on and off.

In the genre search, after a user has clicked the button of the genre search, selection menus comprising multiple categories are shown. The user selects an arbitrarily-chosen category, and as a result, the search is executed. Similarly to the key word search, points on a map corresponding to addresses of the extracted users blink on and off in the genre search. In addition, because a structure of those categories is hierarchical, the user can refine their search in a stepwise manner. As with the key word search, records in a profile TBL 122 are referred to, and as a result, the genre search is executed. Besides, when the user is registered, they can register some categories which they are interested in.

Furthermore, in the example of modified versions of the embodiment, it is possible to show enlarged/reduced map information by using the "reduction button" shown in FIG.9, and those functions of enlargement and reduction can be used when a user wants to know a location of a house blinking on and off in detail. If a user clicks a user's house that is blinking on and off, an avatar, a name, and an address of the user who owns the house are shown in the "avatar" field, the "name" field, and the "address" field which are shown in FIG. 9. Here, information stored in a user information TBL 121 is referred to, and as a result, the avatar, name, and address are shown. A user who performed their search can move to a prescribed user's website after referring to the information and selecting the prescribed user from extracted users.

According to the example of modified versions of the embodiment, results of searches can be grasped visually, and this results in improvement of convenience for users. Moreover, because a user can visually find locations of houses of other users who have the same hobby, the user can place their own house in the place where many users who have the same hobby as the user gather, and the user can have good relations with neighboring users in the virtual community.

## Claims

1. A community providing server providing a virtual community for a user who has a user terminal connected to the server via a network, the server comprising:
a user management information database for storing information concerning registered users who are registered with the virtual community;
a contents database for storing contents data constituting the virtual community; and
a control means for issuing, for the purpose of mounting a virtual tag community on a website of the registered user, a community tag which is to be inserted in HTML data constituting the website.

2. The community providing server as defined in Claim 1, wherein,
the user management information database stores information concerning an avatar which is a character acting for each user in the virtual tag community, and
the control means performs control to show an avatar acting for a user who is accessing a website having the virtual tag community in the virtual tag community.

3. The community providing server as defined in Claim 2, wherein, when a user who has not logged into the virtual community accesses a website having the virtual tag community, the control means performs control to show a specific character which indicates that the user is not in a logged-in state in the virtual tag community.

4. The community providing server as defined in any of Claims 1 to 3, wherein,
the user management information database stores an address of a website of a user owing a website having the virtual tag community among the registered users, and
the control means provides the information of the address of the website for a user via the virtual tag community.

5. The community providing server as defined in any of Claims 1 to 4, wherein,
the contents database stores information of a map of the whole virtual community, and
the user management information database stores information of an address of a registered user, and
the control means provides the information of the map and the address for a user via the virtual tag community.

6. The community providing server as defined in Claim 5, wherein the control means searches the registered users on a prescribed condition with reference to the information of the user management information database and further refers to the information of the map and the address, resulting in the control means outputting a result of the search linked to the information of the map.

7. A virtual community system providing a virtual community for a user, the system comprising:
a virtual community providing server, a user terminal, and a user website server, connected to each other via a network; and wherein,
the community providing server comprises a user management information database for storing information concerning registered users who are registered with the virtual community, a contents database for storing contents data constituting the virtual community, and a control means for issuing, for the purpose of mounting a virtual tag community on a website of the registered user, a community tag which is to be inserted in HTML data constituting the website, and
the user website server comprises storage for saving HTML data into which the community tag is inserted.

8. A virtual community providing method for providing a virtual community for a user who has a user terminal connected to a community providing server via a network, the method comprising:
a step for issuing a community tag for a user who accesses the community server and registers with the virtual community in order to mount a virtual tag community on a website of the registered user, the community tag being inserted in HTML data constituting the website.

9. A virtual community providing program for causing a computer connected to a user terminal via a network to provide a virtual community for a user who has the user terminal, wherein
the program causes the computer to execute a step of issuing a community tag for a user who accesses the community and registers with the virtual community in order to mount a virtual tag community on a website of the registered user, the community tag being inserted in HTML data constituting the website.
